# EUROPEAN PATENT APPLICATION

(11) **EP 2 883 513 A1**
(43) Date of publication of application: **17.06.2015**
(21) Application number: 13827240.6
(22) Date of filing: 23.07.2013
(51) Int. Cl.: A61C 8/00, A61C 13/235

(54) **MAGNETIC ATTACHMENT FOR DENTAL PROSTHESES**

(30) Priority: 09.08.2012 JP 2012177404
(71) Applicant: GC Corporation, Tokyo 113-0033 (JP)
(72) Inventor: KYOTANI Ikuo, Tokyo 113-0033 (JP); KUJIRAI Osamu, Tokyo 113-0033 (JP); TAKAYAMA Masayuki, Tokyo 113-0033 (JP)
(74) Representative: Müller-Boré & Partner Patentanwälte PartG mbB
(86) International application number: PCT/JP2013/069887
(87) International publication number: WO 2014/024673

(57) **Abstract**

Provided is a magnetic attachment for dental prosthesis, in which a material used for an outer shell which covers a permanent magnet does not become magnetized at an unintended portion to reduce magnetic attraction, and which can be easily manufactured. The magnetic attachment for dental prosthesis includes a permanent magnet structure to be fixed to a denture base, on a side where is to have contact with a residual ridge, wherein the permanent magnet is arranged inside the outer shell, and a keeper including a soft magnetic metal material to be fixed on an upper side of a residual ridge in an oral cavity, in a manner to face the permanent magnet structure, wherein a spacer made of a nonmagnetic metal material forming a part of the outer shell which covers the permanent magnet is fixated to another member which forms the outer shell by means of an adhesive agent.

## Description

### BACKGROUND OF THE INVENTION

### Field of the Invention

The present invention relates to a magnetic attachment for dental prosthesis which fixates a dental prosthesis into an oral cavity by means of magnetic attraction.

### Description of the Related Art

For a method of fixating a dental prosthesis provided with a denture base such as a partial denture base and a full denture base into an oral cavity, magnetic attraction has been used. In this method, the magnetic attraction acts between: a permanent magnet structure arranged to the denture base, on a side where is to have contact with a residual ridge in the oral cavity when attached; and a keeper formed in a flat plate made of a soft magnetic metal material and attached to the upside of the residual ridge, in a manner to face the permanent magnet structure. The number of application examples using this magnetic attachment for the dental prosthesis including the permanent magnet structure and the keeper has been rapidly increasing, since it is possible to fixate the dental prosthesis into the oral cavity with a force which does not impair the function of the dental prosthesis, and since the dental prosthesis can be easily attached and removed.

More specifically, on a residual ridge side, a root surface member is attached in the tooth root of a remaining tooth or in an embedded artificial tooth root, and the keeper formed in a flat plate made of a soft magnetic metal material is fixated on an upper end surface of the root surface member. On the other hand, on a dental prosthesis side, the permanent magnet structure is embedded to the dental prosthesis, on a side where is to have contact with the residual ridge when attached. This enables the permanent magnet structure and the keeper to magnetically attract to each other, whereby the dental prosthesis is held to the residual ridge.

Here, the permanent magnet structure generally houses a permanent magnet thereinside, and its surrounding is covered by an outer shell made of a corrosion resistant metal material including a soft magnetic metal material or nonmagnetic metal material. Each joint portion between each member is strongly welded by laser so as to endure the oral cavity environment. The outer shell can be coated by a resin and the like if necessary.

For the metal material to be used for the outer shell of the permanent magnet structure of the magnetic attachment for dental prosthesis, not only a high magnetic property to stably fixate the dental prosthesis, but also a good corrosion resistance to endure corrosion in the oral cavity environment is required. Generally, as a soft magnetic metal material having a high corrosion resistance, a ferritic stainless steel such as 16Cr∼18Cr-BalFe (SUS430), 17Cr∼20Cr-1.75∼2.5Mo-balFe (SUS444), and 28.5∼32.0Cr-1.5∼2.5Mo-balFe (SUS447J1) is used. Also, as the nonmagnetic metal material, an austenitic stainless steel or the like represented by SUS316L having a better corrosion resistance is used.

In order to increase the magnetic attraction between the permanent magnet structure and the keeper, a technique of making a magnetic circuit by using a nonmagnetic metal material is disclosed (for example Patent Documents 1 to 4) . The nonmagnetic metal material is used to a part of the surface of the outer shell of the permanent magnet structure, the surface to be in contact with the keeper. Nowadays, this technique is widely applied in general, and in many cases, an austenitic stainless steel is used for the corrosion resistant nonmagnetic metal material.

### Citation List

### Patent Literatures

Patent Document 1: Japanese Patent Application Laid-Open Publication No. H01-303145
Patent Document 2: Japanese Patent Application Laid-Open Publication No. H04-227253
Patent Document 3: Japanese Patent Application Laid-Open Publication No. H06-209956
Patent Document 4: WO93/25159

### SUMMARY OF THE INVENTION

### Problem to be Solved by Invention

The magnetic attachment for dental prosthesis, in its use of a long period, is required to endure the force according with occlusion, mastication, and food intake, and the sever oral cavity environment such as the temperature in the oral cavity, a rapid change in pH, and exposure to foreign substances such as pathogens. Therefore, it is considered that the soft magnetic metal material and the nonmagnetic metal material need to be sealed by welding of its joint portion. For example, in a cup yoke type magnetic attachment, a laser welding is carried out in order to integrate an austenitic stainless steel (nonmagnetic metal material) formed in a ring with a soft magnetic metal material.

However, depending on welding conditions, there is a drawback that the joint portion in which the materials are melted each other is magnetized during welding. In a case where a nonmagnetic austenitic stainless steel and a soft magnetic ferritic stainless steel are butted and welded, the chemical component at the joint portion can be middle of them in composition, whereby the joint portion can have a mixture structure of two phases of ferrite and austenite. Also, in a case where the joint portion is rapidly heated by welding to be in a liquid state once, thereafter rapidly cooled to be solidified, the crystalline structure immediately after the solidification called as primary crystal has a room temperature. Since this primary crystal has a ferritic structure, there is a drawback that the joint portion changes its state to have a magnetic property, that is, the joint portion is changed to be a magnetic body. Similarly, the nonmagnetic metal materials include a material which is easy to be oxidized, such as titan. There is a possibility that such a material changes in quality at its joint portion by the effect of oxidation, thereby losing the function to form the magnetic circuit.

In order to increase the magnetic attraction of the magnetic attachment for dental prosthesis, a gap created by the nonmagnetic metal material is required to be as small as possible in designing the magnetic circuit. However, if the gap is small, there is a drawback that the effect from the change in the part of the joint portion which became a magnetic body becomes large as described above, which causes drastic deterioration in the magnetic attraction due to the short circuit of the magnetic circuit. Also, the welding itself needs to have a high processing accuracy to each component before welding and needs an expensive equipment, whereby it is difficult to reduce the manufacturing cost.

Accordingly, an object of the present invention is to provide a magnetic attachment for dental prosthesis which can prevent from having a magnetic property at an unintended portion of the member used for the outer shell covering the permanent magnet, so as not to cause degradation of the magnetic attraction, and which can be easily manufactured.

### Means for Solving the Problems

As a result of an intensive study, the inventors of the present invention have found out the following: if a member (spacer) to form a magnetic circuit together with a soft magnetic metal material which forms the outer shell and a permanent magnet, the member being made of a nonmagnetic metal material or a nonmetal material to form a part of the outer shell which covers the permanent magnet, is fixated to the outer shell by means of an adhesive agent, or, if the adhesive agent itself is used as the spacer, it is possible to resolve the problems regarding welding, without degrading the magnetic attraction, and a necessary and sufficient durability can be obtained as a magnetic attachment for dental prosthesis. The present invention has been made based on the above findings. The present invention will be described hereinafter.

A first aspect of the present invention is a magnetic attachment for dental prosthesis including: a permanent magnet structure to be fixed to a denture base, on a side where is to have contact with a residual ridge, wherein a permanent magnet is arranged inside an outer shell of the permanent magnet structure; and a keeper including a soft magnetic metal material to be fixed on an upper side of a residual ridge in an oral cavity in a manner to face the permanent magnet structure, wherein a spacer made of a nonmagnetic metal material forming a part of the outer shell which covers the permanent magnet is fixated to another member which forms the outer shell by means of an adhesive agent.

A second aspect of the present invention is a magnetic attachment for dental prosthesis including: a permanent magnet structure to be fixed to a denture base, on a side where is to have contact with a residual ridge, wherein a permanent magnet is arranged inside an outer shell of the permanent magnet structure; and a keeper including a soft magnetic metal material to be fixed on an upper side of a residual ridge in an oral cavity in a manner to face the permanent magnetic structure, wherein a spacer which forms a part of the outer shell which covers the permanent magnet is a nonmetal material, and is fixated to another member which forms the outer shell by means of an adhesive agent.

A third aspect of the present invention is the magnetic attachment for dental prosthesis according to the second aspect, wherein a solid nonmetal material processed to have a shape of the spacer is fixated to the another member which forms the outer shell by means of the adhesive agent.

A fourth aspect of the present invention is the magnetic attachment for dental prosthesis according to the second aspect, wherein the nonmetal material is a liquid or pasty nonmetal material which is applied, poured, or filled to a portion where the spacer is to be arranged in the outer shell, and which has set.

A fifth aspect of the present invention is the magnetic attachment for dental prosthesis according to the first aspect, wherein the outer shell includes a yoke made of a soft magnetic metal material having a bottomed cylindrical shape, and the permanent magnet is contained in the yoke.

A sixth aspect of the present invention is the magnetic attachment for dental prosthesis according to any one of the second to the fourth aspect, wherein the outer shell includes a yoke made of a soft magnetic metal material having a bottomed cylindrical shape, and the permanent magnet is contained in the yoke.

A seventh aspect of the present invention is the magnetic attachment for dental prosthesis according to any one of the first to the sixth aspect, wherein the adhesive agent is colored.

### Effects of the Invention

According to the present invention, it is possible to produce a permanent magnet structure without using expensive welding machines, whereby it is possible to reduce cost and easily produce the structure. Also, it is possible to prevent the change in quality of the member by welding, whereby it is possible to maintain a high magnetic attraction. Further, the dimension accuracy for each component of the permanent magnet structure can be eased in producing, and it is possible to reduce cost from this viewpoint as well.

### BRIEF DESCRIPTION OF THE DRAWINGS

Fig. 1 is a perspective view of a magnetic attachment 1 for dental prosthesis according to a first embodiment;
Fig. 2 is a cross-sectional view of the magnetic attachment 1 for dental prosthesis according to the first embodiment;
Fig. 3 is a cross-sectional view of a magnetic attachment 101 for dental prosthesis according to a second embodiment.

### DETAILED DESCRIPTION OF THE INVENTION

The functions and benefits of the present invention will be apparent from the following description of modes for carrying out the invention. Hereinafter, the present invention will be described based on embodiments shown in drawings. However, the present invention is not limited to these embodiments.

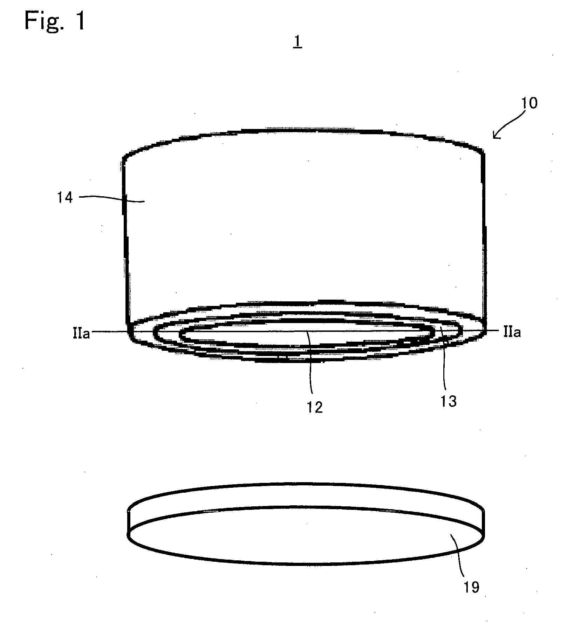

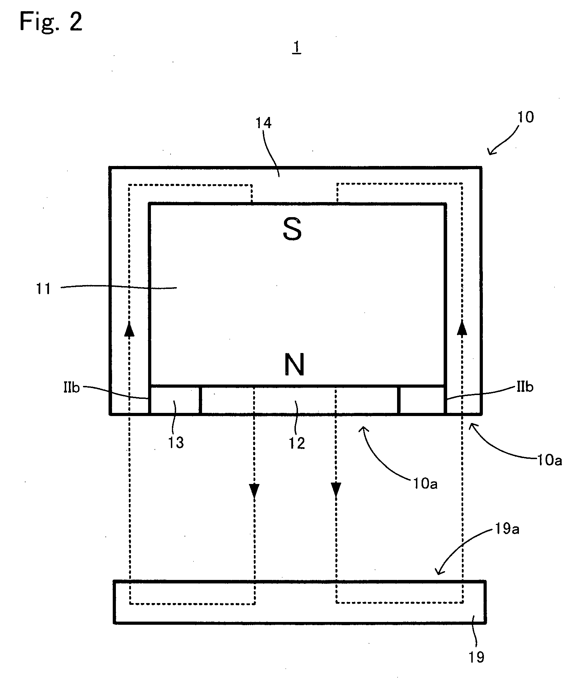

Figs. 1 and 2 are views to explain the magnetic attachment 1 for dental prosthesis according to a first embodiment.

Fig. 1 is a perspective view, and Fig. 2 is a cross-sectional view in an axial direction of a permanent magnet structure 10 including the line shown by IIa-IIa in Fig. 1.

The magnetic attachment 1 for dental prosthesis of this embodiment is one example of a cup yoke type magnetic attachment for dental prosthesis and includes a permanent magnet structure 10 and a keeper 19. The permanent magnet structure 10 includes a permanent magnet 11, a plate yoke 12, a cup yoke 14, and a spacer 13.

The permanent magnet 11 is preferably a permanent magnet having a high magnetic attraction in view of stable attachment of dental prosthesis, and preferably is difficult to demagnetize in view of maintaining the attraction for a long time. Also, from its nature, it is required to be small and to have a strong magnetic flux as much as possible. For this reason, the permanent magnet 11 is preferably a rare earth magnet such as SmCo-based magnet and NdFe-based magnet.

The plate yoke 12 is a yoke formed in a plate and which functions as a part of an outer shell which covers the permanent magnet. The plate yoke 12 is made of a soft magnetic metal material having a corrosion resistant property and arranged so as to have contact with the N pole of the permanent magnet 11. As can be seen from Figs. 1 and 2, in this embodiment, the plate yoke 12 is shaped in a circular plate and arranged such that one plate face is laid on the N pole of the permanent magnet 11. However, the outer peripheral shape of the plate yoke 12 is formed smaller than the inner peripheral shape of the cup yoke 14 which is formed in a tubular shape. Therefore, with a posture that the plate yoke 12 is arranged being laid on the N pole of the permanent magnet 11, an annular gap is created between the outer peripheral surface of the plate yoke 12 and the inner peripheral surface of the cup yoke 14.

For the material to make the plate yoke 12 as described above, a material to be used for a yoke of a known attachment for dental prosthesis can be used. More specifically, a ferritic stainless steel such as 16Cr∼18Cr-BalFe (SUS430), 17Cr∼20Cr-1.75∼2.5Mo-balFe (SUS444), and 28.5∼32.0Cr-1.5∼2.5Mo-balFe (SUS447J1) can be exemplified.

The spacer 13 functions as a part of the outer shell, is made of a nonmagnetic metal material having a corrosion resistant property, and formed in an annular shape. The spacer 13 is formed so as to be arranged in the annular gap created between the outer peripheral surface of the plate yoke 12 and the inner peripheral surface of the cup yoke 14 described above.

Examples of the nonmagnetic metal material used for the spacer 13 include: a material made by molding by means of cut machining a nonmagnetic metal body such as titanium, aluminum, gold, silver, platinum, palladium, chrome, and magnesium that are used for a magnetic attachment for dental prosthesis from before; a material in which iron, tin, mercury compound and the like are adequately added to the nonmagnetic metal body; a material made by processing a nonmagnetic alloy such as an austenitic stainless steel and amalgam to form it into a desirable shape by means of cut machining or molding by casting mold and the like. It should be noted that a general austenitic stainless steel includes nickel, which is one of the metals that easily cause metallic allergy. Therefore, in a case where the austenitic stainless steel is used, it is preferable to use an austenitic stainless steel not including nickel as much as possible.

The cup yoke 14 is formed in a bottomed cylindrical shape and functions as a part of the outer shell. The cup yoke 14 is formed so as to include the permanent magnet 11, the plate yoke 12, and the spacer 13. As can be seen from Fig. 2, in the cup yoke 14, the S pole of the permanent magnet 11 is arranged in a manner to have contact with the bottom of the cup yoke 14, and the N pole of the permanent magnet 11 is arranged on an open end portion side of the cup yoke 14. An end surface of the N pole side is positioned so as to be set back inside the tubular shape than the end surface of the cup yoke 14 to form a recessed part. The plate yoke 12 and the spacer 13 are arranged to the recessed part.

In the permanent magnet structure 10, the cup yoke 14 and the spacer 13 are fixated by means of an adhesive agent at a portion shown by 11b. Also, the spacer 13 and the plate yoke 12 are pressed and fitted as described below. This enables the permanent magnet 11 to be sealed by the cup yoke 14, the spacer 13, the plate yoke 12, and the adhesive agent that form the outer shell.

For the adhesive agent, a conventional adhesive agent which can adhere the soft magnetic metal material and the nonmagnetic metal material can be used without particular limitations. For example: an acrylic resin based adhesive agent consisting of two components that polymerize by redox polymerization to be set and adhered when mixed; an urethane resin based adhesive agent consisting of two components of polyol having hydroxyl group on the terminal thereof and polyisocyanate, or urethane polymer having isocyanate group on the terminal thereof and polyol that cause chemical reaction to be set and adhered by being combined and mixed; an epoxy resin based adhesive agent which is made by adding a setting agent such as amine to an epoxy resin prepolymer consisting of bisphenol A and epichlorohydrin that have been subjected to condensation reaction, to have graft polymerization to be set and adhered; phenol resin based adhesive agent; polyimide based adhesive agent and the like can be given. Among them, the epoxy resin based adhesive agent having a high safety, water resistant property, abrasion resistant property, humidity resistant property, chemical resistant property, insulation property and the like as the characteristics of the polymers polymerized three dimensionally and a high initial adhesion, or the acrylic resin based adhesive agents widely used as a restoration material and an adhesive agent for dental use are preferable.

In a case where the acrylic resin based adhesive agent is used, a material in which a filler (inorganic material, organic material) which has been subjected to a surface treatment, a polymerization agent, and a colorant are combined to a base resin; and an adhesive agent to adhere to metal, resin, or ceramics are used together depending on the purpose. The acrylic resin based adhesive agent is required to have a high mechanical performance such as compressive strength, bending strength, and hardness, a high abrasion resistance, a small polymerization shrinkage, and a fluidity so that the adhesive agent is easy to be filled in narrow portions. If the improvement in chemical adhesive strength cannot be expected, it is preferable to improve the adhesive strength by making the surface to be roughened in a mechanical manner. As a polymerization catalyst for polymerization, it is preferable to employ for example chemical polymerization catalyst and photopolymerization catalyst that are conventionally used for a composite resin material or resin cement and the like for dental use, and combination thereof.

The adhesive agent does not need to have a metal color such as a color of stainless steel, and preferably it is colored in a various type of color such as red, yellow, blue, green, and black, categorized depending on the size of the magnetic attachment for dental prosthesis. If the coloring is applied to the adhesive agent as described, the possibility for the operator to choose wrong size or shape in using a very small magnetic attachment can be reduced.

The keeper 19 is a member having a plate shape and made of a soft magnetic metal material having a corrosion resistant property. The keeper 19 is formed in a circular plate in this embodiment, and generally formed in a circular plate or an elliptical plate. Examples of the material to configure the keeper include the same materials as that of the plate yoke 12.

Each of the permanent magnet structure 10 and the keeper 19 is provided with a suction face to suction each other when they function as the magnetic attachment for dental prosthesis. A suction face 10a of the permanent magnet structure 10 is formed by: an exposed face of the plate yoke 12 where is opposite from the side to have contact with the permanent magnet 11; and an end surface of the cup yoke 14 having a cylindrical shape on an opening side. A suction face 19a of the keeper 19 is one surface of the plate surfaces in a plate shape. It is preferable that the suction face 10a of the permanent magnet structure 10 and the suction face 19a of the keeper 19 are configured such that they can have contact having a large dimension as much as possible when layered. Specifically, it is preferable that the suction faces are formed in a planar shape or have a same curvature face.

The magnetic attachment 1 for dental prosthesis as described above can be used in the same manner as a known magnetic attachment for dental prosthesis. That is, on a residual ridge side, the root surface member is attached in the tooth root of a remaining tooth or an embedded artificial tooth root, and the keeper 19 is fixated on an upper end surface of the root surface member. As described above, the suction face 19a of the keeper 19 is fixed in a manner to face the inside of the oral cavity, that is, fixed to the upper portion of the residual ridge.

On the other hand, on the dental prosthesis side, the permanent magnet structure 10 is embedded to the denture base, on a side where is to have contact with the residual ridge when attached. At this time, the permanent magnet structure 10 is arranged having a direction such that the suction face 10a faces the suction face 19a of the keeper 19 having a posture of attachment of the dental prosthesis.

Then, in the oral cavity, the suction face 10a of the permanent magnet structure 10 arranged to the dental prosthesis is suctioned by the suction face 19a of the keeper 19 arranged on the upper portion of the residual ridge, whereby the dental prosthesis is held in the oral cavity.

According to the magnetic attachment 1 for dental prosthesis, the dental prosthesis is attached inside the oral cavity, and with the posture in which the permanent magnet structure 10 and the keeper 19 are suctioned to each other, a magnetic circuit as shown by the dashed linear arrows in Fig. 2 is formed, whereby it is possible to generate a strong suction force (although the permanent magnet structure 10 and the keeper 19 are shown being separated in Fig. 2, they are in contact with each other when the magnetic circuit is formed).

Also, the permanent magnet 11 is surrounded by the plate yoke 12, the spacer 13, and the cup yoke 14 that form the outer shell, and the spacer 13 and the cup yoke 14 are adhered to each other by the adhesive agent, which prevents saliva and the like from reaching the permanent magnet 11.

Further, since the spacer 13 and the cup yoke 14 are adhered by the adhesive agent, it is possible to fixate the spacer 13 and the cup yoke 14 without changing their physical property and to seal the permanent magnet 11, unlike the case of joining them by means of high heat such as welding and brazing. Therefore, the degradation of the magnetic attraction due to the short circuit of the above magnetic circuit and the like is not caused, whereby it is possible to maintain a high magnetic attraction. In this regard, any welding equipment or brazing equipment or the like are not required, and a high-degree technique such as welding and brazing is not required either. Specifically, since the permanent magnet structure is a small material, a high-degree technique and a high-degree equipment which supports the technique are required for the welding and brazing of the permanent magnet structure. Therefore, according to the present invention, it is also possible to easily produce the permanent magnet structure.

The permanent magnet structure 10 described above can be made as follows for example: arranging the permanent magnet 11 inside the cup yoke 14 having a cylindrical shape, and preparing in advance a member in which the plate yoke 12 is inserted inside the spacer 13 having an annular shape and press fitted (the member is sometimes referred to as "press-fitted body"); then, arranging the press-fitted body into the cup yoke 14 so as to cover the permanent magnet 11. Here, the press-fitted body and the cup yoke 14 is adhered by the adhesive agent as described above. That is, the permanent magnet structure 10 is formed by adhering the press-fitted body to the cup yoke 14 in which the permanent magnet 11 is inserted. Here, the press-fitting (sometimes referred to as "shrink fit") can be carried out as follows. That is, a columnar body made of a soft magnetic metal material which is to be the plate yoke, and a tubular body made of a material (for example an austenitic stainless steel) which is to be the spacer are prepared. Here, the tubular body has a configuration in which the columnar body can be inserted therein only after the tubular body is heated to a predetermined temperature (e.g. 120°C) to distend. The tubular body is heated to the predetermined temperature, then the columnar body is inserted, thereafter they are cooled to have a normal temperature. The resultant body is cut to have a predetermined thickness, whereby the above press-fitted body can be produced.

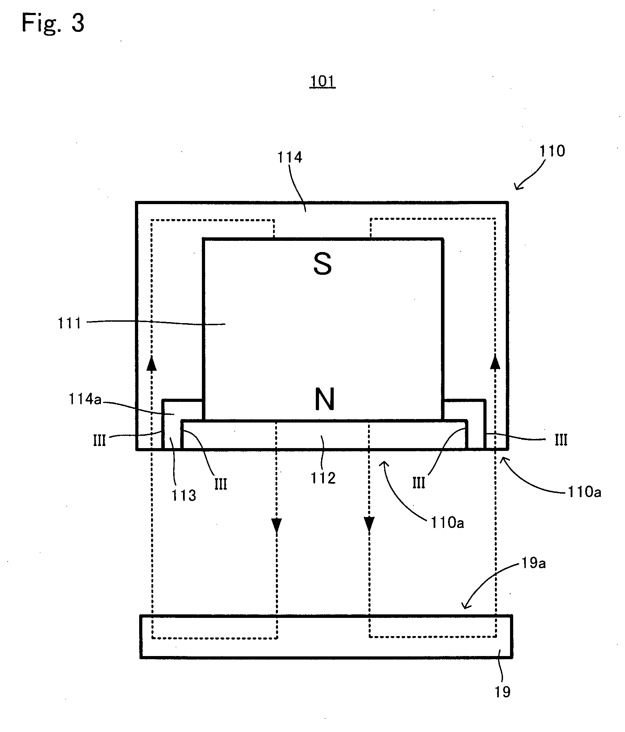

Fig. 3 is a view to explain a magnetic attachment 101 for dental prosthesis according to a second aspect. Fig. 3 corresponds to Fig. 2.

The magnetic attachment 101 for dental prosthesis of this configuration is another example of the cup yoke type magnetic attachment for dental prosthesis and it includes a permanent magnet structure 110 and the keeper 19. The permanent magnet structure 110 includes a permanent magnet 111, a plate yoke 112, a cup yoke 114, and a spacer 113. Here, the explanation of the keeper 19 is same as the above explanation. Regarding the materials themselves of the permanent magnet 111, the plate yoke 112, cup yoke 114, and the adhesive agent included to be provided to the magnetic attachment 101 for dental prosthesis, the explanation thereof are same as the above explanation.

The permanent magnet 111 is same as the above-described permanent magnet 11.

The cup yoke 114 functions as a part of the outer shell and is formed in a bottomed cylindrical shape. The cup yoke 114 is configured to include the permanent magnet 111, the plate yoke 112, and the spacer 113. A cut portion 114a is provided to an open end portion of the cup yoke 114, the open end portion being opposite from the side of the bottom thereof, so that the permanent magnet structure 110 can more firmly endure a force in a vertical direction and so that the inter periphery of the cylindrical shape can be widen. As can be seen from Fig. 3, in the cup yoke 114, the S pole of the permanent magnet 111 is arranged so as to have contact with the bottom of the cup yoke 114, and the N pole is arranged on an open end portion side of the cup yoke 114. The end face on the N pole side is positioned so as to be set back inside the end face of the cylindrical shape compared to the end face of the cup yoke 114, and is arranged at the depth at which the cut portion 114a is provided.

The plate yoke 112 is a yoke formed in a plate shape and functioning as a part of the outer shell. As can be seen from Fig. 3, the plate yoke 112 is arranged such that one plate surface thereof is layered to the N pole of the permanent magnet 111. However, the plate yoke 112 has a shape such that: an outer peripheral end of the plate yoke 112 is arranged inside the cut part 114a, in the inner peripheral shape of the cup yoke 114 formed in a cylindrical shape; and a predetermined gap is formed from the inner peripheral surface of the cut portion 114a. Therefore, in a posture in which the plate yoke 112 is arranged to be layered with the N pole of the permanent magnet 111, an annular gap is formed between the outer peripheral surface of the plate yoke 112 and the inner peripheral surface of the cup yoke 114. The annular gap has an L shape cross section, as can be seen from Fig. 3.

The spacer 113 is a spacer made of a nonmetal material and formed in an annular shape which functions as a part of the outer shell. The spacer 113 is formed so as to be arranged to the above-mentioned annular gap formed between the outer peripheral surface of the plate yoke 112 and the inner peripheral surface of the cup yoke 114. Therefore, the spacer 113 has a structure in which a member having an L-shape cross section is annularly formed.

Solid nonmetal materials such as materials in which the above-explained adhesive agent is set, resin materials which are conventionally used (e.g. preferably resin materials for various types of artificial teeth, the material described in Japanese Patent Application Laid-Open Publication No. H10-323353), zirconia-based or alumina-based ceramics materials, rubber-based materials, and minerals can be used as the spacer.

Here, the opposite side of the plate yoke 112 from the side where is in contact with the permanent magnet 111, and the end surface on the open side of the bottomed cylindrical shape of the cup yoke 114 are formed to an even surface and exposed, to thereby form the suction face 110a.

In the permanent magnet structure 110, the cup yoke 114 and the spacer 113 are fixated at the portion shown by III in Fig. 3, by means of the adhesive agent. The spacer 113 and the plate yoke 112 are also fixated by means of the adhesive agent. Whereby, the permanent magnet 111 is sealed by the cup yoke 114, the spacer 113, and the plate yoke 112, and the adhesive agent that form the outer shell.

Also, according to the magnetic attachment 101 for dental prosthesis, the same effect as that of the magnetic attachment 1 for dental prosthesis is exerted. When the suction face 19a of the keeper 19 and the suction face 110a of the permanent magnet structure 110 are suctioned to each other, the magnetic circuit as shown by the dashed linear arrow in Fig. 3 is formed.

The permanent magnet structure 110 can be made for example as follows: the permanent magnet 111 is arranged inside the cup yoke 114 formed in a cylindrical shape; the adhesive agent is applied to the portion where the cup yoke 114 and the spacer 113 made of a nonmetal material are in contact with each other, to thereby fixate the cup yoke 114 and the spacer 113; leaked adhesive agent and the material to be used in combination are removed, and the remaining adhesive agent is completely set; in order to fixate the plate yoke 112 to this attached body of the cup yoke 114 and the spacer 113, the adhesive agent is applied to the portion where the attached body and the plate yoke 112 are in contact with each other, to thereby fixate the attached body and the plate yoke 112; leaked adhesive agent and the material to be used in combination are removed, and the remaining adhesive agent is completely set; finally, the suction face 110a of the permanent magnet structure 110 where is to be in contact with the suction face 19a of the keeper 19 is grinded to be smooth.

In this regard, either of the fixation of the cup yoke 114 and the spacer 113 made of a nonmetal material, and the fixation of the spacer 113 made of a nonmetal material and the plate yoke 112 can come first.

An example in which the spacer 113 provided to the magnetic attachment 101 for dental prosthesis is a nonmetal material is given. In the conventional technique, a joining by means of welding is carried out, thus a nonmagnetic metal material is used as an adequate material for welding. However, in the present invention, the joining is carried out by means of an adhesive agent, whereby welding is not needed. Therefore, a nonmetal material which does not have magnetic property can be used for the spacer as in this embodiment.

On the other hand, a liquid or pasty nonmetal material to be set can also be used as the nonmetal material. In this case as well, a material in which the above-mentioned adhesive agent is set can be used for example. With this regard, it is preferable that 5 mass% to 95 mass% of filling material is added to the adhesive agent. It should be noted that the filling material needs to be a nonmagnetic material. Here, by mixing a metal powder or glass powder to the filling material, it is possible to improve adhesion property of epoxy-based adhesive agent, acrylic based adhesive agent and the like. In a case where the spacer is formed by setting the adhesive agent, the spacer can be formed by: applying, pouring, or filling an adhesive agent to the gap where the spacer is to be arranged; thereafter setting the adhesive agent. According to this, the production and the attachment of the spacer are carried out at the same time.

Regarding the magnetic attachment 1 for dental prosthesis, an example in which the press-fitted body of the plate yoke and the spacer is used is shown. Accuracy is required for the production of the press-fitted body. In contrast, in a case where the liquid or pasty nonmetal material which has set is used as the spacer, a high accuracy as required for the press-fitted body is not required, and it is only necessary to prepare the annular spacer in which the plate yoke is inserted thereinside.

Also, as the material to form the spacer, hot-melt materials can be used as well. Example of a hot-melt adhesive agent include ethylene-vinyl acetate resin based adhesive agents, polyurethane resin based adhesive agents, polyamide resin based adhesive agents, polyolefin resin based adhesive agents, vinyl chloride sol/vinyl chloride based solvent type adhesive agents; silicone based adhesive agents and the like. In a case where this kind of material is used to make the spacer, it is preferable that an undercut or a projection is formed to the gap where the spacer is to be formed. This makes it possible to increase a retaining property of the hot-melt material.

In a case where the spacer is formed by setting the hot-melt material, the spacer can be formed by pouring a hot-melt material before setting to the gap where the spacer is to be arranged, thereafter setting the hot-melt material. According to this, the production and the attachment of the spacer are carried out at the same time.

By using the liquid or pasty material to be set as described above, it is possible to reduce the manufacturing step of the permanent magnet structure whereby it is possible to reduce the cost.

Also, by using a nonmetal material for the spacer, it becomes possible to make a so-called nickel-free permanent magnet structure.

The magnetic attachment according to the present invention is of course useful not only for the cup yoke type, but also for every kind of magnetic attachment which forms a magnetic circuit such as sandwich type, split pole type and the like, from the arrangement of the outer shell, the permanent magnet, the member (spacer), and the keeper of the permanent magnet structure.

### Description of the Reference Numerals

- 1, 101: magnetic attachment for dental prosthesis
- 10, 110: permanent magnet structure
- 11, 111: permanent magnet
- 12, 112: plate yoke
- 13, 113: spacer
- 14, 114: cup yoke
- 19: keeper

## Claims

1. A magnetic attachment for dental prosthesis comprising:
a permanent magnet structure to be fixed to a denture base, on a side where is to have contact with a residual ridge, wherein a permanent magnet is arranged inside an outer shell of the permanent magnet structure; and
a keeper comprising a soft magnetic metal material to be fixed on an upper side of a residual ridge in an oral cavity in a manner to face the permanent magnet structure,
wherein
a spacer made of a nonmagnetic metal material forming a part of the outer shell which covers the permanent magnet is fixated to another member which forms the outer shell by means of an adhesive agent.

2. A magnetic attachment for dental prosthesis comprising:
a permanent magnet structure to be fixed to a denture base, on a side where is to have contact with a residual ridge, wherein a permanent magnet is arranged inside an outer shell of the permanent magnet structure; and
a keeper comprising a soft magnetic metal material to be fixed on an upper side of a residual ridge in an oral cavity in a manner to face the permanent magnet structure,
wherein
a spacer which forms a part of the outer shell which covers the permanent magnet is a nonmetal material, and is fixated to another member which forms the outer shell by means of an adhesive agent.

3. The magnetic attachment for dental prosthesis according to claim 2, wherein
a solid nonmetal material processed to have a shape of the spacer is fixated to the another member which forms the outer shell, by means of the adhesive agent.

4. The magnetic attachment for dental prosthesis according to claim 2, wherein
the nonmetal material is a liquid or pasty nonmetal material which is applied, poured, or filled to a portion where the spacer is to be arranged in the outer shell, and which has set.

5. The magnetic attachment for dental prosthesis according to claim 1, wherein
the outer shell comprises a yoke made of a soft magnetic metal material having a bottomed cylindrical shape, and the permanent magnet is contained in the yoke.

6. The magnetic attachment for dental prosthesis according to any one of claims 2 to 4,
wherein
the outer shell comprises a yoke made of a soft magnetic metal material having a bottomed cylindrical shape, and the permanent magnet is contained in the yoke.

7. The magnetic attachment for dental prosthesis according to any one of claims 1 to 6, wherein the adhesive agent is colored.
